# EUROPEAN PATENT SPECIFICATION

(11) **EP 2 848 451 B1**
(45) Date of publication and mention of the grant of the patent: **18.10.2017**
(21) Application number: 14460057.4
(22) Date of filing: 15.09.2014
(51) Int. Cl.: B60L 5/00, H01R 41/00, B60L 11/18, B60L 5/36, B60M 7/00

(54) **Connection system for charging batteries of a vehicle, particularly an electric bus**
Verbindungssystem zum Laden von Batterien eines Fahrzeugs, insbesondere eines elektrischen Busses
Système de connexion pour charger des batteries d'un véhicule, notamment un bus électrique

(30) Priority: 15.09.2013 PL 40534213
(43) Date of publication of application: 18.03.2015
(73) Proprietor: Solaris Bus & Coach S.A., 62-005 Owinska (PL); Ekoenergetyka - Polska Sp. z o.o., 65-031 Zielona Gora (PL)
(72) Inventor: Michalak, Dariusz,, 62-004 Czerwonak (PL); Pikula, Michal, 61-623 Poznan (PL); Sierszynski, Michal, 62-200 Poznan (PL); Wojenski, Maciej, 64-920 Pila (PL); Kubik, Bartosz, 98-200 Sieradz (PL); Holodok, Artur, 66-015 Przylep (PL)
(74) Representative: Suszczewicz, Romuald

(56) References cited:
- WO-A2-2010/134763
- CN-A- 101 580 023
- DE-A1-102004 048 226
- JP-A- 2006 081 310
- US-A1- 2013 193 919

## Description

Connection system for charging batteries of a vehicle, particularly an electric bus The present invention concerns a design of a connection system for charging batteries of a vehicle, particularly an electric bus.

Electric vehicles, in particular electric buses, are becoming a transportation means which is more and more frequently used in municipal transport services. However, for conversion of city transportation services to electric vehicles it is necessary to deploy technical means for recharging traction batteries in the vehicles in possibly shortest time. It results in a need for construction of very high power charging stations. To ensure operational safety and comfort of such charging stations, a charging method is needed which would limit human attendance in the battery charging procedure.

From publication WO2012118422 a connection system for charging bus batteries is known, comprising a head equipped with brushes of current carrying contacts and mounted on a pantograph installed on a vehicle roof, and a platform mating with the said head and installed on a structural member located outside the vehicle. The platform is equipped with high-current carrying rails and special devices for positioning of the head which mates with it.

WO2010134763 discloses a connection system for charging a battery of an electric bus where at the roof of the bus it is a lifting mechanism installed that presses the plug part of the system towards the socket part that is installed at the charging station.

DE102004048226 discloses a connection system for charging a battery of an electric bus where a driving mechanism is installed at the bottom of a bus that presses the contact elements of the plug against the corresponding socket contacts that are installed recessed in a limiting part of a driving surface. However, the disadvantage of known solutions of connection systems for charging the batteries of vehicles is that in order to ensure correct connection of high-current contacts in the head with high-current contacts in the platform, either the bus driver has to manoeuvre the vehicle very precisely when approaching the platform, which is rather arduous, or complicated aiming devices must be used which, due to their complexity, are not very reliable and often fail, particularly in adverse weather conditions.

The purpose of the invention is to provide a design of a connection system allowing the process of accelerated charging electric buses to be performed safely and reliably; moreover this mechanism is, to a maximum possible extent, easy to operate and reduces the need of precise manoeuvring of a bus during approaching the platform, thus improving the ergonomics of work of a city line bus driver.

The essence of the design of the connection system for charging batteries of a vehicle, particularly an electric bus, which according to the invention comprises, at least, a head equipped with brushes and mounted on a pantograph or another lifting mechanism installed on a vehicle roof, and further comprises a platform mating with the head, equipped with electric contacts and installed on a structural member located outside the vehicle, is characterised in that the head is connected with the lifting mechanism through a ball-and-socket joint, while the head is of basically prismatic shape and is formed by mechanically connected dielectric holders of a PE contact segment, a positive pole high-current contact segment, a negative pole high-current contact segment, and a communication contact segment, and inside each holder the electrical brushes are mounted slidably on springs. The electrical brushes in their extreme positions protrude from the holder surfaces. The brushes of the PE contact segment protrude from the top surface of the head. The brushes of the positive pole high-current contact segment, the brushes of the negative pole high-current contact segment and the brush of the communication contact segment protrude from the same side surface of the head or from two opposite side surfaces of the head. A platform is constituted by a body inside which at least one dielectric strip is mounted in parallel to the opposite sides of the body and slidably in the direction perpendicular to these sides of the body. This strip is connected with a driving mechanism mounted in the body. The strip holds a negative pole high-current contact rail, a positive pole high-current contact rail and a communication contact rail. The platform is also constituted by a wall which covers the body from above, the inner surface of which is electrically conductive and is grounded. When the strip is in such a position that it is in contact with the side surface of the head, the brushes of the positive pole high-current contact segment, the brushes of the negative pole high-current contact segment and the brush of the communication contact segment are in contact with the surface of the positive pole high-current contact rail, the surface of the negative pole high-current contact rail and the surface of the communication contact rail, respectively. According to another preferable feature of the invention, inside the body two dielectric strips are mounted in parallel to the opposite sides of the body and slidably in the direction perpendicular to these sides; moreover, each strip is connected with its individual driving mechanism mounted in the body, while in each strip the negative pole high-current contact rail, the positive pole high-current contact rail and the communication contact rail are mounted. According to further preferable feature of the invention, the opposite surfaces along which the head contacts with the strip surfaces are mutually parallel. According to another preferable feature of the invention, the opposite surfaces along which the head contacts with the strip deviate from vertical plane.

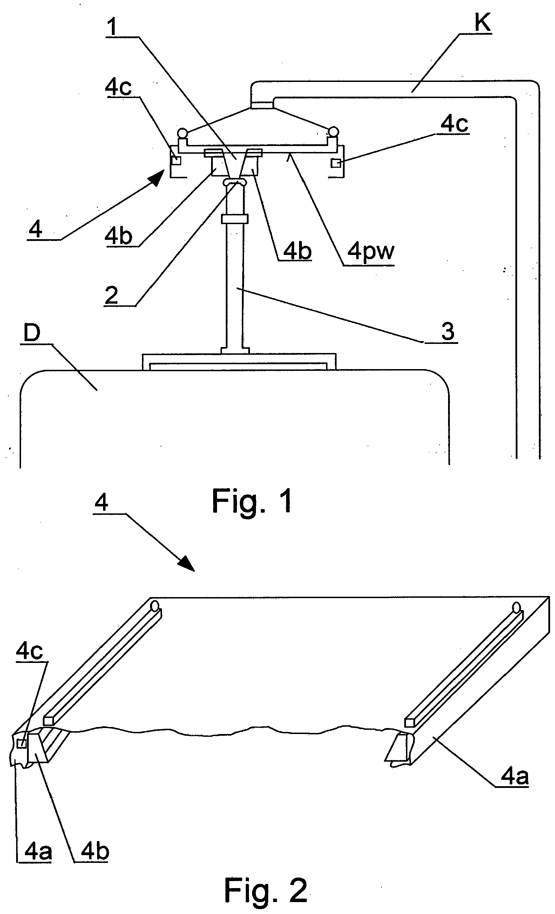

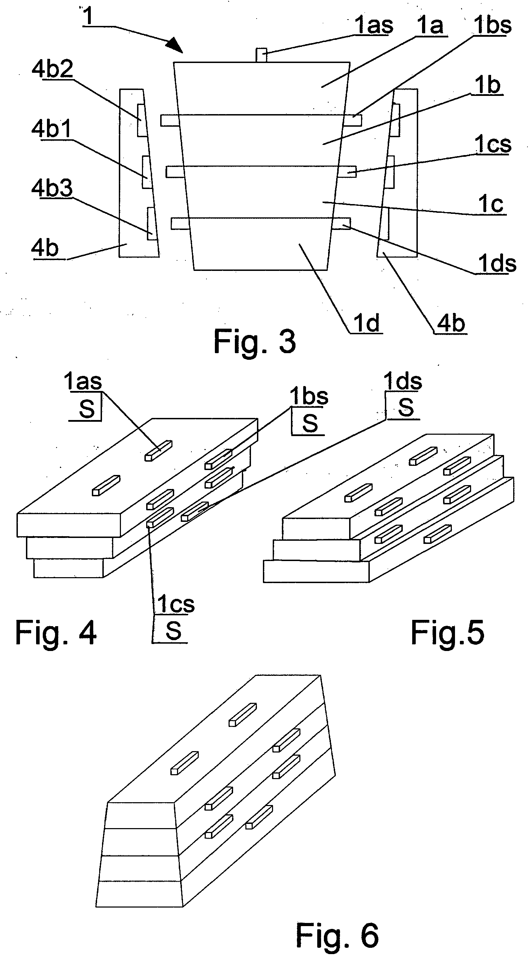

The subject of the invention will now be described in more detail, based on an example of one of many possible embodiments, with reference to drawings, where Figure 1 presents the general layout of the head and the platform, Figure 2 presents the schematic diagram of the platform, Figure 3 presents the front view of the head with the platform strips, and Figures 4, 5, and 6 present schematically other exemplary embodiments of the head.

The design of the connection system for charging batteries of a vehicle, which, according to one of many possible exemplary embodiments of the invention, is designed for use in an electric bus, includes the head **1** which is mounted through the ball-and-socket joint **2** on the lifting mechanism **3** arranged in the form of the pantograph installed on the vehicle roof **D**, and the platform **4** mating with said head **1** and installed on the structural member **K** located outside the vehicle. The head **1** is of prismatic shape which, through detachable connections known in the art, is formed by mechanically connected dielectric holders of the PE contact segment **1a,** the positive pole high-current contact segment **1b,** the negative pole high-current contact segments **1c,** and the communication contact segment **1d.** Inside the dielectric holders **1a** the electrical brushes **1as, 1bs, 1cs,** and **1ds** are mounted slidably on springs **S.** The electrical brushes **1as, 1bs, 1cs,** and **1ds** in their extreme positions protrude from the holder surfaces. The brushes **1as** of the PE contact segment protrude from the top surface of the head **1,** while the brushes **1bs** of the positive pole high-current contact segment **1b,** the brushes **1cs** of the negative pole high-current contact segment **1c** and the brush **1ds** of the communication contact segment **1d** protrude from two opposite side surfaces of the head **1.** The platform **4** is constituted by the body **4a** inside which two dielectric strips **4b** are mounted in parallel to the opposite sides of the body **4a** and slidably in the direction perpendicular to these sides of the body **4a.** In the strip **4b** the negative pole high-current contact rail **4b1,** the positive pole high-current contact rail **4b2** and the communication contact rail **4b3** are mounted. Each strip **4b** is connected with its individual driving mechanism **4c** mounted in the body **1.** The inner surface **4pw** of the wall which covers the body **4a** from above is electrically conductive and constitutes a PE contact. When the strip **4b** is in such a position that it is in contact with the side surface of the head **1,** the brushes **1bs** of the positive pole high-current contact segment **1b,** the brushes **1cs** of the negative pole high-current contact segment **1c** and the brush **1ds** of the communication contact segment **1d** are in contact with the surface of the positive pole high-current contact rail **4b2**, the surface of the negative pole high-current contact rail **4b1** and the surface of the communication contact rail **4b3,** respectively. The opposite surfaces along which the head **1** contacts with the strip **4b** are mutually parallel and deviate from vertical plane.

The head **1,** thanks to its being mounted through the ball-and-socket joint **2**, has the number of degrees of freedom required for its correct connection with the platform **4** in natural working conditions of the connection system, like ruts in roadway pavement, kneeling of the bus, and non-ideally parallel positioning of the bus with respect to the axis of the power supplying platform. Sliding movement of the strip **4b** in the body **4a** is possible thanks to longitudinal bearings that support the ends of the strips **4b.** The communication contacts **1d** and communication contact rails **4b3** are used mostly for checking continuity of the PE circuit in the entire charging system, i.e. the charging device + the bus. As a structural member **K** located outside the vehicle, a post or any other architectural element may be used, provided it meets the technical requirements concerning assembly, possibility to connect a wire bundle, as well as strength properties. The dimensions of the platform **4** under which the driver must park the bus ensure full range of bus stopping tolerance. The platform **4** has the shape of a rectangle with dimensions of approximately 1000 mm x 2000 mm, which gives the tolerance of a bus stopping point within the range of 200 cm (front - rear) and 80 cm (left - right). It is the advantage that is not featured in other solutions that require the driver to position the vehicle very precisely with respect to power supply contacts. The invention allows for stopping the bus in a proper position without the need for using complex optical aiming systems or proximity sensors that can contribute to the increased frequency of failures. Another factor which ensures reliable and safe connection of the pantograph charging system is the shape of the connection system head **1.**

Upon stopping the bus the charging procedure is activated from the level of the bus control panel or it is activated automatically, and the driver only permits to start the charging process. The charging process is completed according to the following steps:
- Prior to connecting, the DC charger communicates wirelessly with the electric bus;
- Then the mechanical arm of the pantograph extends the head **1** towards the platform **4** situated on an appropriate height;
- The PE contacts close first and at that time the surfaces of the brushes **1as** of the PE contacts **1a** are pressed against the inner surface **4pw** of the wall which covers the body **4a** from above;
- Further, upon the action of suitable force exerted by the driving mechanism **4c,** high-current contact rails **4b1** and **4b2** are pressed against the brushes of high-current contacts **1cs** and **1bs,** and communication contacts **1ds** and **4b3** used for checking the continuity of the PE circuit are closed; if there is no continuity in the circuit, the charging process starting procedure is aborted.

Communication between the charging device and the bus during the charging process can be realized wirelessly or using wires through the communication contacts that enable connection of the CAN bus in the connection system head **1** and in the platform **4.** The charging process can be finished: automatically as soon as the battery has been fully loaded, loaded to the level which can be defined in system settings, intentionally by the driver from the level of the bus control panel by removing the charging enable signal, or, finally, in emergency situations from the level of the bus or of the charger. Both closing and opening of charging contacts takes place in current-free and potential-free conditions.

## Claims

1. Connection system for charging batteries of a vehicle, particularly an electric bus, comprising at least a head equipped with brushes and mounted on a lifting mechanism installed on a vehicle roof, further comprising a platform mating with the head, equipped with electric contacts and installed on a structural member located outside the vehicle, whereby the head **(1)** is connected with the lifting mechanism **(3)** through a ball-and-socket joint **(2)**, **characterised in that** the head **(1)** of prismatic shape is formed by mechanically connected dielectric holders of a PE contact segment **(1a),** a positive pole high-current contact segment **(1b),** a negative pole high-current contact segment **(1c)** and a communication contact segment **(1d),** inside which respective electrical brushes **(1as, 1bs, 1cs,** and **1ds)** are mounted slidably on springs **(S),** whereas the electrical brushes **(1as, 1bs, 1cs,** and **1ds)** in their extreme positions protrude from the holder surfaces, furthermore the brushes **(1as)** of the PE contact segment **(1a)** protrude from the top surface of the head **(1)**, the brushes **(1bs)** of the positive pole high-current contact segment **(1b)**, the brushes **(1cs)** of the negative pole high-current contact segment **(1c)** and the brushes **(1ds)** of the communication contact segment **(1d)** protrude from the same side surface of the head **(1)** or from two opposite side surfaces of the head, furthermore the platform **(4)** is constituted by a body **(4a)** inside which at least one dielectric strip **(4b)** is mounted in parallel to the opposite sides of the body **(4a)** and slidably in the direction perpendicular to these sides of the body, furthermore the strip **(4b)** is connected with a driving mechanism **(4c)** mounted in the body **(4a)**, while the strip **(4b)** holds a negative pole high-current contact rail **(4b1)**, a positive pole high-current contact rail **(4b2)**, and a communication contact rail **(4b3),** furthermore the platform **(4)** is also constituted by a wall which covers the body **(4a)** from above, the inner surface **(4pw)** of which is electrically conductive and also, when the strip **(4b)** is in such a position that it is in contact with the side surface of the head **(1)**, the brushes **(1bs)** of the positive pole high-current contact segment **(1b)**, the brushes **(1cs)** of the negative pole high-current contact segment **(1c)** and the brushes **(1ds)** of the communication contact segment **(1d)** are in contact with the surface of the positive pole high-current contact rail **(4b2),** the surface of the negative pole high-current contact rail **(4b1)** and the surface of the communication contact rail **(4b3),** respectively.

2. Connection system for charging batteries according to Claim 1, **characterised in that** inside the body two dielectric strips **(4b)** are mounted in parallel to the opposite sides of the body **(4a)** and slidably in the direction perpendicular to these sides of the body, furthermore each strip **(4b)** is connected with its individual driving mechanism **(4c)** mounted in the body **(4a)**, while in each strip **(4b)** the negative pole high-current contact rail **(4b1)**, the positive pole high-current contact rail **(4b2)** and the communication contact rail **(4b3)** are mounted.

3. Connection system for charging batteries according to Claim 1 or 2, **characterised in that** the opposite surfaces along which the head **(1)** contacts with the strip **(4b)** surfaces are mutually parallel.

4. Connection system for charging batteries according to Claim or 2, or 3, **characterised in that** the opposite surfaces along which the head **(1)** contacts with the strip **(4b)** deviate from vertical plane.

## Patentansprüche

1. Verbindungssystem zum Laden von Batterien eines Fahrzeugs, insbesondere eines elektrischen Busses, mit mindestens einem mit Bürsten versehenen Kopf, der an einem an einem Fahrzeugdach installierten Hebemechanismus angebracht ist, ferner mit einer Plattform, die mit dem Kopf zusammenpasst, mit elektrischen Kontakten ausgestattet und auf einem außerhalb des Fahrzeugs befindlichen Bauteil installiert ist, wobei der Kopf **(1)** mit dem Hebemechanismus **(3)** durch ein Kugelgelenk **(2)** verbunden ist, **dadurch gekennzeichnet, dass** der Kopf **(1)** der prismatischen Form durch mechanisch verbundene dielektrische Halter eines PE-Kontaktsegments **(1a),** eines Pluspol-Hochstromkontaktsegments **(1b)**, eines Minuspol-Hochstromkontaktsegments **(1c),** und eines Kommunikationskontaktsegments **(1d),** in dessen Inneren jeweilige elektrische Bürsten **(1as, 1bs, 1cs** und **1ds)** verschiebbar auf Federn **(S)** montiert sind, gebildet wird, während die elektrische Bürsten **(1as, 1bs, 1cs** und **1ds)** in ihren extremen Positionen von den Halterflächen vorstehen, ferner die Bürsten **(1as)** des PE-Kontaktsegments **(1a)** von der Oberseite des Kopfes **(1)** vorstehen, die Bürsten **(1bs)** des Pluspol-Hochstromkontaktsegments **(1b),** die Bürsten **(1cs)** des Minuspol-Hochstromkontaktsegments **(1c)** und die Bürsten **(1ds)** des Kommunikationskontaktsegments **(1d)** von der gleichen Seitenfläche des Kopfes **(1)** oder von zwei gegenüberliegenden Seitenflächen des Kopfes vorstehen, ferner die Plattform **(4)** aus einem Körper **(4a)** gebildet wird, in dessen Inneren mindestens einen dielektrischen Streifen **(4b)** parallel zu den gegenüberliegenden Seiten des Körpers **(4a)** und verschiebbar in der Richtung senkrecht zu diesen Seiten des Körpers angebracht ist, ferner ist der Streifen **(4b)** mit einem im Körper **(4a)** gelagerten Antriebsmechanismus **(4c)** verbunden, während der Streifen **(4b)** eine Minuspol-Hochstromkontaktschiene **(4b1)**, eine Pluspol Hochstromkontaktschiene **(4b2)** und eine Kommunikationskontaktschiene **(4b3)** hält, ferner wird die Plattform **(4)** auch aus einer Wand, die den Körper **(4a)** von oben abdeckt, deren innere Oberfläche **(4pw)** elektrisch leitend ist, gebildet und wenn sich der Streifen **(4b)** in einer solchen Position befindet, dass er mit der Seitenfläche des Kopfes **(1)** in Kontakt ist, werden die Bürsten **(1b)** des Pluspol-Hochstromkontaktsegments **(1b)**, die Bürsten **(1cs)** des Minuspol-Hochkontaktsegment **(1c)** und die Bürsten **(1ds)** des Kommunikationskontaktsegments **(1d)** entsprechend mit der Oberfläche der Pluspol-Hochstromkontaktschiene **(4b2),** der Oberfläche der Minuspol-Hochstromkontaktschiene **(4b1)** und der Oberfläche der Kommunikationkontaktschiene **(4b3)** in Kontakt stehen.

2. Verbindungssystem zum Laden von Batterien nach Anspruch **dadurch gekennzeichnet, dass** innerhalb des Körpers zwei dielektrischen Streifen **(4b)** parallel zu den gegenüberliegenden Seiten des Körpers **(4a)** und verschiebbar in die Richtung senkrecht zu diesen Seiten des Körpers angebracht sind, ferner jeder Streifen **(4b)** mit seinem im Körper **(4a)** angebrachten individuellen Antriebsmechanismus **(4c)** verbunden ist, während in jedem Streifen **(4b)** die Minuspol-Hochstromkontaktschiene **(4b1)**, der Pluspol-Hochstromkontaktschiene **(4b2)** und die Kommunikationskontaktschiene **(4b3)** montiert sind.

3. Verbindungssystem zum Laden von Batterien nach Anspruch 1 oder 2, **dadurch gekennzeichnet, dass** die gegenüberliegenden Flächen, entlang denen der Kopf **(1)** mit dem Streifen **(4b)** in Kontakt steht, zueinander parallel sind.

4. Verbindungssystem zum Laden von Batterien nach Anspruch 1 oder 2 oder 3, **dadurch gekennzeichnet, dass** die gegenüberliegenden Flächen, entlang denen der Kopf **(1)** mit dem Streifen **(4b)** in Kontakt steht, von der vertikalen Ebene abweichen.

## Revendications

1. Système de connexion pour charger des batteries d'un véhicule, en particulier un bus électrique, comprenant au moins une tête équipée de brosses et montée sur un mécanisme de levage installé sur un toit de véhicule, comprenant en outre une plate-forme s'accouplant avec la tête, équipé de contacts électriques et installé sur un élément structurel situé à l'extérieur du véhicule, de sorte que la tête **(1)** est reliée au mécanisme de levage **(3)** par l'intermédiaire d'un joint à rotule et douille **(2), caractérisé en ce que** la tête **(1)** de forme prismatique est formée par des supports diélectriques connectés mécaniquement d'un segment de contact PE **(1a),** d'un segment de contact à courant élevé à pôle positif **(1b),** d'un segment de contact à courant élevé à pôle négatif **(1c)** et d'un segment de contact de communication **(1),** à l'intérieur desquels des brosses électriques respectives **(1as, 1bs, 1cs et 1ds**) sont montées de manière coulissante sur des ressorts **(S),** alors que les brosses électriques **(1as, 1bs, 1cs et 1ds)** dans leurs positions extrêmes dépassent des surfaces de support, en outre, les brosses **(1a)** du segment de contact PE **(1a)** dépassent de la surface supérieure de la tête **(1),** les brosses **(1bs)** du segment de contact à courant élevé à pôle positif **(1b)**, les brosses **(1cs)** du segment de contact à courant élevé à pôle négatif **(1c)** et les brosses **(1ds)** du segment de contact de communication **(1d)** dépassent de la même surface latérale de la tête **(1)** ou de deux surfaces latérales opposées de la tête, en outre, la plate-forme **(4)** est constituée par un corps **(4a)** à l'intérieur duquel au moins une bande diélectrique **(4b)** est montée en parallèle aux côtés opposés du corps **(4a)** et de manière coulissante dans la direction perpendiculaire à ces côtés du corps, en outre, la bande **(4b)** est reliée à un mécanisme d'entraînement **(4c)** monté dans le corps **(4a),** tandis que la bande **(4b)** contient un rail de contact à courant élevé à pôle négatif **(4b1)**, un rail de contact à courant élevé à pôle positif **(4b2)** et un rail de contact de communication **(4b3),** en outre, la plate-forme **(4)** est également constituée par une paroi qui recouvre le corps **(4a)** de dessus, la surface intérieure **(4pw)** duquel est électriquement conductrice et aussi, lorsque la bande **(4b)** est dans une position telle qu'elle est en contact avec la surface latérale de la tête **(1),** les brosses **(1bs)** du segment de contact à courant élevé à pôle positif **(1b),** les brosses **(1cs)** du segment de contact à courant élevé à pôle négatif **(1c)** et les brosses **(1ds)** du segment de contact de communication **(1d)** sont en contact avec la surface du rail de contact à courant élevé à pôle positif **(4b2),** la surface du rail de contact à courant élevé à pôle négatif **(4b1)** et la surface du rail de contact de communication **(4b3),** respectivement.

2. Système de connexion pour charger des batteries selon la revendication 1, **caractérisé en ce que,** à l'intérieur du corps, deux bandes diélectriques **(4b)** sont montées parallèlement aux côtés opposés du corps **(4a)** et de manière coulissante dans la direction perpendiculaire à ces côtés du corps, en outre, chaque bande **(4b)** est reliée à son mécanisme d'entraînement **(4c)** individuel monté dans le corps **(4a)**, tandis que dans chaque bande **(4b)** le rail de contact à courant élevé à pôle négatif **(4b1)**, le rail de contact à courant élevé à pôle positif **(4b2)** et le rail de contact de communication **(4b3)** sont montés.

3. Système de connexion pour charger des batteries selon la revendication 1 ou 2, **caractérisé en ce que** les surfaces opposées le long desquelles la tête **(1)** est en contact avec les surfaces de la bande **(4b)** sont mutuellement parallèles.

4. Système de connexion pour charger des batteries selon la revendication 1 ou 2, ou 3, **caractérisé en ce que** les surfaces opposées le long desquelles la tête **(1)** est en contact avec les surfaces de la bande **(4b)** s'écartent du plan vertical.
